# EUROPÄISCHE PATENTSCHRIFT

(11) **EP 1 652 419 B1**
(45) Veröffentlichungstag und Bekanntmachung des Hinweises auf die Patenterteilung: **16.07.2008**
(21) Anmeldenummer: 05021989.8
(22) Anmeldetag: 08.10.2005
(51) Int. Cl.: A01D 34/86

(54) **Mähvorrichtung, und damit ausgestattetes Mähfahrzeug**
Mowing device and mowing vehicle with such a mowing device
Dispositif de coupe et véhicule de coupe avec un tel dispositif de coupe

(30) Priorität: 12.10.2004 DE 102004049576; 11.11.2004 DE 102004054391
(43) Veröffentlichungstag der Anmeldung: 03.05.2006
(73) Patentinhaber: Barlage, Iris, 49626 Berge (DE)
(72) Erfinder: Kneilmann, Theodor, D-48317 Drensteinfurt - Rinkerode (DE)
(74) Vertreter: Bossmeyer, Jörg Peter

(56) Entgegenhaltungen:
- DE-A1- 3 129 860
- DE-U1- 9 311 854
- FR-A- 2 564 279
- US-A- 3 397 521
- US-A- 4 206 580

## Beschreibung

Die Erfindung betrifft eine Mähvorrichtung nach dem Oberbegriff des Anspruchs 1 und ein mit einer derartigen Mähvorrichtung ausgestattetes Mähfahrzeug.

Gattungsgemäße Mähvorrichtungen sind aus der Praxis bekannt.

Es handelt sich hierbei um so genannte "Mähbalken", die beispielsweise an Schlepper, Radlader, LKW oder spezielle Arbeitsfahrzeuge angeschlossen werden können. Sie dienen im kommunalen Einsatz zum Mähen der Seitenstreifen von Straßen, im privaten Einsatz dienen sie zum Mähen der Randstreifen von Pferdekoppeln, Wegen oder dergleichen.

Ein Problem besteht stets darin, Hindernisse freizumähen, welche in den zu mähenden Randstreifen aufgestellt sind. Diese Hindernisse werden nachfolgend häufig verallgemeinernd als "Pfosten" bezeichnet, wobei es sich rein beispielhaft um Hindernisse wie Zaunpfähle, Straßenbegrenzungs bzw. -leitpfosten, Laternenmasten oder die Pfosten von Verkehrsschildern handeln kann.

Es ist aus der Praxis bekannt, das Freischneiden der Pfosten manuell vorzunehmen, mit in der Hand gehaltenen Mähwerkzeugen. Dieses Verfahren ist allerdings höchst unwirtschaftlich.

Aus der Patentschrift US-A-3397521 ist eine Mähvorrichtung der eingangs genannten Art bekannt, bei der an einem Ausleger zwei drehbare Schwenkarme mit jeweils einem drehangetriebenen Schneidwerkzeug angeordnet sind, dessen Drehbewegung durch einen am Ausleger befindlichen ausser Eingriff bringbaren Anschlag begrenzt wird und die Schwenkarme bei außer Eingriff befindlichen Anschlag automatisch um eine Drehachse schwenken.

Diese Mähvorrichtung hat den Nachteil, dass aufgrund der zwei Schwenkarme nur eine geringe Mähbreite und dadurch eine geringe Arbeitsleistung erreicht wird. Ein weiterer Nachteil dieser bekannten Mähvorrichtung besteht darin, dass das zu ummähende Hindernis mit dem außer Eingriff bringbaren Anschlag am Ausleger kollidieren muß und neben den Schwenkarmen selbst auch der Ausleger um das Hindernis verschwenkt werden muß, und dadurch eine sehr hohe Auslösekraft für den außer Eingriff bringbaren Anschlag aufgewendet werden muß. Aufgrund der zuvor erwähnten hohen Auslösekraft wird das Hindernis stark belastet, dadurch können nur massive Hindernisse ummäht werden, nicht aber leichte Hindernisse wie Baumstämmchen oder Kunststoff-Leitpfosten, da diese beschädigt oder zerstört würden.

Aus der Patentschrift DE3129860 ist eine weitere Mähvorrichtung mit einem Mähwerkzeugträger aus drei sternförmig angeordneten Armen bekannt, welche beim Anstoßen an ein Hindernis um eine senkrechte Achse verschwenkbbar ist. Die rotierenden Mähwerkzeuge sind jeweils mit einem Fühlerbügel ausgestattet, der beim Anstoßen an ein Hindernis eine am Rastanschlag anliegende Sperrklinke entsperrt, und somit den Schwenkvorgang auslöst.
Diese Mähvorrichtung hat den Nachteil, dass der Fühlerbügel nur einen Teilbereich des rotierenden Mähwerkzeugs abdeckt und dadurch die zum Schwenkvorgang auslösende Kontaktfläche zum Hindernis sehr klein ist, wodurch ein hohes Maß an Konzentration des Fahrers zum Betreiben der Mähvorrichtung erforderlich ist. Der verbleibende Bereich des rotierenden Mähwerkzeugs ist ungeschützt und führt bei nicht exaktem Fahren der Mähvorrichtung zur Kollision des Mähwerkzeugs mit dem Hindernis und dadurch zu Beschädigung bzw. Zerstörung des Hindernisses und des Mähwerkzeugs.

Ein weiterer Nachteil der beiden zuvor erwähnten Mähvorrichtungen ist die einschränkende Schwenkbarkeit der Schwenkarme bzw. des Mähwerkzeugträgers in nur einem stets gleichen Drehsinn, dadurch sind die Mähvorrichtungen nur in einer Vorwärtsbewegung rechtsseitig zu betreiben. Bei sehr starkem Bewuchs der Hindernisse ist zum vollständigen Freimähen ein wiederholtes Mähen notwendig, dieses ist mit den bekannten Mähvorrichtungen umständlich und zeitaufwändig, da aufgrund der eingeschränkten Schwenkbarkeit der Schwenkarme bzw. des Mähwerkzeugträgers nicht entgegengesetzt der vorherigen Fahrtrichtung bzw. nicht in Rückwärtsbewegung gearbeitet werden kann.

Der Erfindung liegt die Aufgabe zugrunde, eine gattungsgemäße Mähvorrichtung dahingehend zu verbessern, dass diese ein automatisiertes, mechanisiertes Freischneiden von Pfosten mit einer hohen Arbeitsleistung ermöglicht. Weiterhin liegt der Erfindung die Aufgabe zugrunde, ein dazu geeignetes Mähfahrzeug anzugeben.

Diese Aufgabe wird durch eine Mähvorrichtung mit den Merkmalen des Anspruchs 1 gelöst sowie durch ein Mähfahrzeug mit den Merkmalen des Anspruchs 14.

Eine bevorzugte Ausbildung der Erfindung schlägt mit anderen Worten am Ausleger drei drehbewegliche, sternförmig angeordnete Schwenkarme vor, die als Verlängerung des Auslegers das Schneidwerkzeug tragen und dessen Drehbeweglichkeit durch einen Anschlag begrenzt ist. Dabei wird nachfolgend davon ausgegangen, dass in an sich bekannter Weise der Ausleger an einem Mähfahrzeug befestigt ist und seitlich über das Mähfahrzeug hinausragt. Gerät der dem Ausleger verlängernde Schwenkarm vor einem Hindernis, so wird der Anschlag außer Eingriff gebracht, und die Schwenkarme rotieren um die Drehachse, bis erneut die Drehbewegung durch einen Anschlag behindert wird.

Dabei ist eine " aufrechte" Drehachse vorgesehen, also eine Drehachse, die sich von einem unteren Punkt zu einem höher liegenden Punkt erstreckt. Bei einer liegenden Drehachse könnte das Schneidwerkzeug zwar auch dem Hindernis ausweichen, allerdings nur bei Hindernissen, deren Höhe in Abhängigkeit von dem Schwenkradius des Schwenkarms begrenzt wäre. Die aufrechte Drehachse hingegen ermöglicht eine seitliche Ausweichbewegung des Schwenkarms, so dass beliebig hohen Hindernissen ausgewichen werden kann, beispielsweise auch den Pfosten von Straßenbeleuchtungen. Insbesondere eine vertikale Ausrichtung der Drehachse ermöglicht eine - bezogen auf die Länge des Schwenkarms - besonders effektive und weiträumige Ausweichbewegung.

Durch die Schwenkbewegung der Schwenkarme weicht der am Hindernis anliegende Schwenkarm aus, und während die Mähvorrichtung weiterbewegt wird - beispielsweise indem das Mähfahrzeug weiterfährt, drehen die Schwenkarme um die Drehachse bis in eine Stellung, in welcher sich das zuvor am Hindernis anliegende Schneidwerkzeug hinter dem Hindernis befindet, so dass das Hindernis regelrecht ummäht wird, allerdings nicht umgemäht wird, ohne dass hierfür der gesamte Ausleger bewegt werden muss. Zudem ist durch die Schwenkbewegung der Schwenkarme sichergestellt, dass auch seitlich neben dem Hindernis stehender Bewuchs gemäht wird, insbesondere der Bewuchs zur Straße hin, auf welcher sich das Mähfahrzeug bewegt, so dass beispielsweise reflektierende Straßenpfosten auf diese Weise von der Straße aus zuverlässig erkannt werden können.

Die Ausweichbewegung, die die Schwenkarme mit dem Schneidwerkzeug vollführen, kann sensorisch gesteuert werden, so dass beispielsweise motorisch die Schwenkarme verschwenken, sobald ein entsprechender Sensor einen Pfosten registriert. Da in der Praxis nicht auszuschließen ist, dass der Bewuchs selbst Störsignale für den Sensor auslösen kann, ist eine vorteilhafte, einfache und gebrauchstüchtige Ausgestaltung der Mähvorrichtung dadurch möglich, dass der dem Ausleger verlängernde Schwenkarm zunächst bis an den Pfosten herangefahren wird, also ein mechanischer Kontakt zwischen dem Abweiser am Schwenkarm und Pfosten entsteht. Der Abweiser ist jeweils am Ende des Schwenkarms befestigt, und hält mindestens die Fläche frei, die vom rotierenden Schneidwerkzeug bedeckt wird, somit wird das Schneidwerkzeug als auch der Pfosten während des Kontaktes geschont. Der Anschlag ist federbelastet, beweglich gelagert, und er liegt einem so genannten Druckstück an, welches mit dem Schwenkarm verbunden ist. Der Anschlag wird außer Eingriff gebracht, indem die Feder bei entsprechendem Druck gegen den Schwenkarm des Anschlags nachgibt, weil der durch das Druckstück auf den Anschlag ausgeübte Druck zu groß wird.

Der Antrieb der Schwenkarme, um diese um die Drehachse zu verschwenken, kann vorteilhaft ohne eigenen Antriebsmotor verwirklicht sein und vielmehr mittels der Antriebsmittel erfolgen, welche zum Antrieb der an den Schwenkarmen befindlichen Schneidwerkzeuge dienen. Dabei geht der vorliegende Vorschlag davon aus, dass die Verschwenkung der Schwenkarme ohnehin durch den Druck unterstützt wird, mit welchem das Hindernis auf den Schwenkarm einwirkt.

Das Druckstück, welches dem Anschlag anliegt, kann auf vorteilhafte Weise durch eine Kulissenscheibe verwirklicht sein, wobei die einzelnen Vorsprünge der Kulissenscheibe jeweils ein Druckstück bilden und wobei die Anzahl dieser Druckstücke der Anzahl der Schwenkarme entspricht, so dass jedem Schwenkarm, wenn er seine vorgesehene Mähstellung einnimmt, ein passend angeordnetes Druckstück zugeordnet ist, welches an dem Anschlag anliegt, so dass auf diese Weise der betreffende Schwenkarm in seiner gewünschten Mähstellung gehalten wird.

Eine möglichst einfache bauliche Ausgestaltung ergibt sich dadurch dass die Kulissenscheibe um dieselbe Drehachse drehbar ist wie der Schwenkarm, so dass auf diese Weise keine zusätzlichen mechanischen Übersetzungsmittel erforderlich sind.

Eine möglichst verschleißfreie Ausgestaltung der die Schwenkarme festhaltenden bzw. bei entsprechendem Druck freigebenden Sperrvorrichtung kann dadurch verwirklicht sein, dass der Anschlag die Rolle ausgestaltet ist, die dem Druckstück anliegt. Auf diese Weise wird Gleitreibung zwischen den gegeneinander beweglichen Komponenten vermieden.

Vorteilhaft kann die Mähvorrichtung mittels Schnellkupplungen an eine Fahrzeug-Hydraulik angeschlossen werden, wobei hydraulische Anschlussleitungen zu einem Hydraulikmotor der Mähvorrichtungen führen. Auf diese Weise wird bei vielen Fahrzeugen eine bereits vorhandene hydraulische Infrastruktur genutzt, so dass mit einem sehr geringen Umbau-Aufwand lediglich die mechanische Halterung der Mähvorrichtung an dem betreffenden Fahrzeug geschaffen werden muss.

Eine preisgünstige und betriebssichere sowie leichtgewichtige Ausgestaltung des Antriebs für die einzelnen Schneidwerkzeuge kann durch flexible Antriebselemente erfolgen. Dabei ist ein erstes flexibles Antriebselement vorgesehen, welches - beispielsweise von dem vorerwähnten Hydraulikmotor - zu einem so genannten Verteiler führt, wobei von diesem Verteiler abgehende zweite Antriebselemente jeweils zu jedem Schwenkarm und dem dort vorgesehenen Schneidwerkzeug führen.

Beispielsweise kann in besonders wartungsarmer Ausgestaltung vorgesehen sein, die flexiblen Antriebselemente in Form von Riemen vorzusehen, Wobei als Verteiler eine mehrrillige Riemenscheibe vorgesehen ist, wobei eine Nut für den vorerwähnten Antriebsriemen vorgesehen ist, der beispielsweise vom Hydraulikmotor zum Verteiler führt, und wobei jeweils eine weitere Nut für jeden Riemen vorgesehen ist, der von diesem Verteiler zu einem der Schwenkarme bzw. zu dem dort angeordneten Schneidwerkzeug führt.

Vorteilhaft kann die Drehachse des Verteilers, um welche das erstgenannte flexible Antriebselement läuft, mit der Drehachse zusammenfallen, um welche der bzw. die Schwenkarme drehbar gelagert sind. Auf diese Weise wird bereits allein durch Lagerreibung eine Rotation des Schwenkarmes bzw. der Schwenkarme ermöglicht, ohne dass ein eigener Antriebsmotor für den Schwenkarm vorgesehen sein müsste, um diesen, wenn er einem Hindernis ausweicht, um die Drehachse zu bewegen.

Vorteilhaft kann das Schneidwerkzeug um eine aufrechte Drehachse rotieren. Auf diese Weise wird im Gegensatz zu Messerwalzen, die um eine horizontale Achse rotieren, die Verwendung von preisgünstigen Kunststofffäden ermöglicht, die an Stelle metallischer Klingen eingesetzt werden können und eine Schonung des Hindernisses sicherstellen sowie selbst bei einem Kontakt mit einem Hindernis nicht sofort irreparabel beschädigt sind, und die zudem bei Verschleiß kostengünstig ersetzbar sind.

Das vorgeschlagene Mähfahrzeug kann problemlos bedient werden, indem es beispielsweise einer Reihe von Zaunpfählen geradlinig entlang gefahren werden kann, ohne dass das Fahrzeug selbst Ausweichbewegungen durchführen muss. Auch entfällt die genau zu überwachende Bewegung, um Ausweichbewegungen durchzuführen, wie dies durch Anheben und Absenken des Auslegers bekannt ist.

Vielmehr erfolgen die das Hindernis und das Schneidwerk schonenden Ausweichbewegungen automatisch dadurch, das der jeweils am weitesten nach außen ragende und somit gegen das Hindernis geführte Schwenkarm automatisch ausweicht.

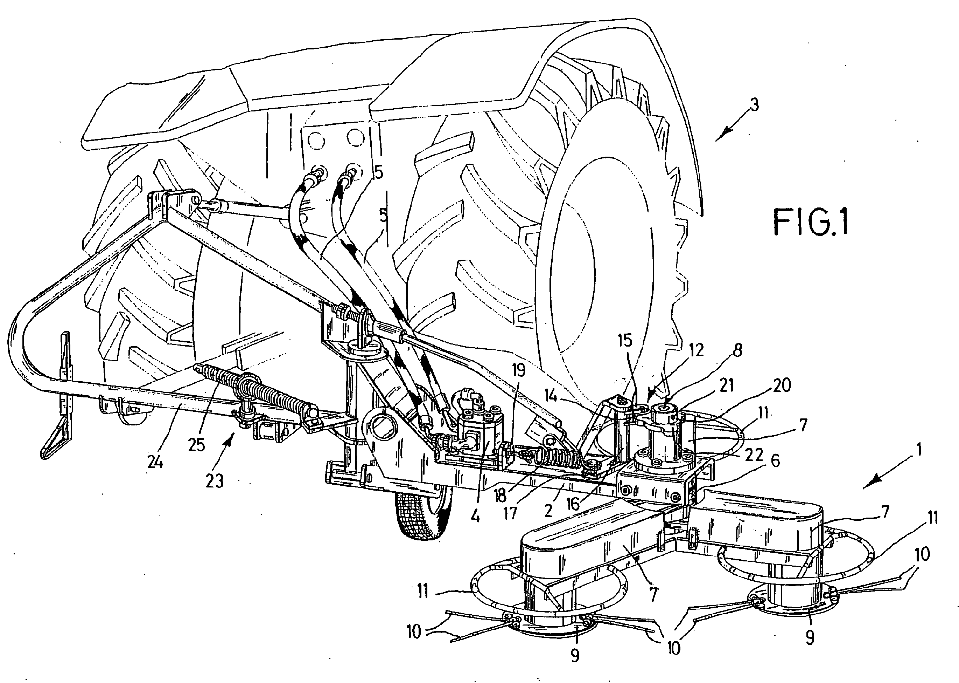

Ausführungsbeispiele der Erfindung werden anhand der rein schematischen Zeichnungen nachfolgend näher erläutert. In den Zeichnungen ist jeweils eine Mähvorrichtung dargestellt. Gleiche bzw. gleich wirkende Bauteile sind in den drei Zeichnungen mit denselben Bezugsziffern **gekennzeichnet.** Dabei zeigt
- Fig. 1: eine perspektivische Gesamt-Ansicht eines ersten Ausführungsbeispiels einer Mähvorrichtung,

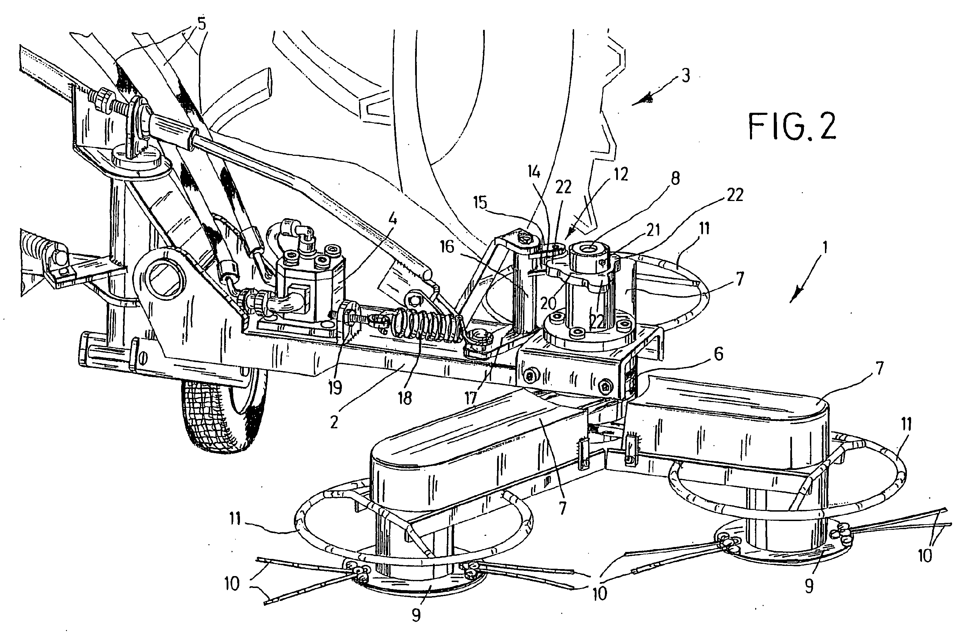

- Fig. 2: einen Ausschnitt aus der Ansicht von Fig. 1 in dem gegenüber vergrößertem Maßstab, und

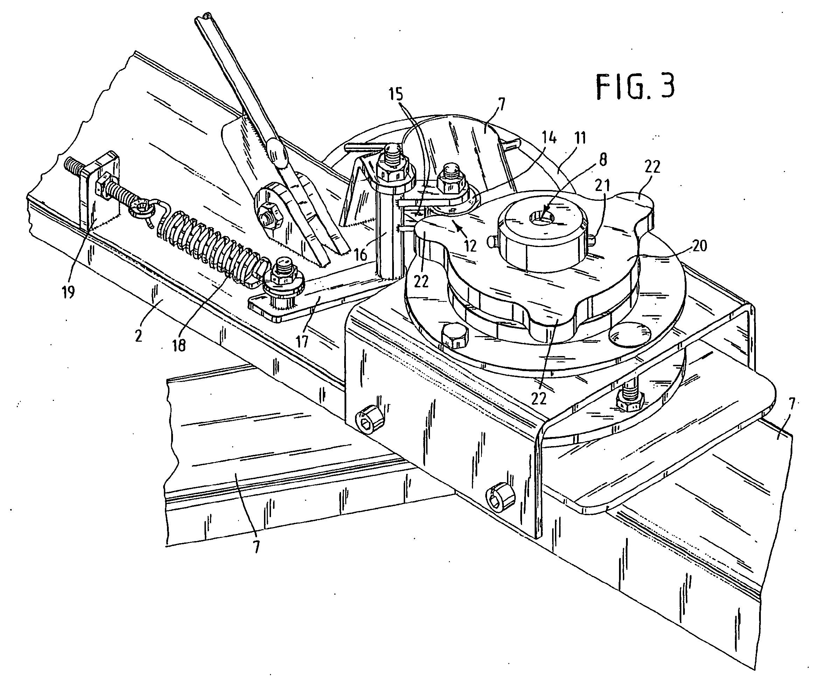

- Fig. 3: eine ausschnittweise und perspektivische Ansicht, ähnlich Fig. 2, bei einem zweiten Ausführungsbeispiel, von oben auf den Bereich der Drehachse für die Schwenkarme.

In den Zeichnungen ist mit 1 insgesamt eine Mähvorrichtung bezeichnet, die einen Ausleger 2 aufweist, welcher an einem schematisch angedeuteten Fahrzeug 3 lösbar befestigt ist. Der Ausleger 2 trägt einen Hydraulikmotor 4, welcher von einer Hydraulik mit doppelt wirkendem Steuergerät versorgt wird, welches am Fahrzeug 3 vorgesehen ist. Die Ölleistung beträgt 35 I pro Minute. Der Hydraulikmotor 4 weist zwei Hydraulik-Schlauchleitungen 5 auf, die mit Schnellkupplungen an die Hydraulikversorgung des Fahrzeugs 3 angeschlossen sind. Vom Hydraulikmotor 4 erfolgt eine Kraftübertragung mittels eines Keilriemens auf eine 4-rillige Keilriemenscheibe 6, die als Antriebs-Verteiler dient und mit etwa 2000U/min umläuft.

Am Ende des Auslegers 2 sind drei sternförmig angeordnete Schwenkarme 7 vorgesehen, die um eine vertikale Drehachse 8 drehbar gelagert sind. Jeder Schwenkarm 7 trägt ein Schneidwerkzeug9, welches als Messerteller ausgestaltet ist, der mit Kunststofffäden 10 bestückt ist. Die Kunststofffäden 10 stellen Verschleißteile dar und sind auswechselbar, und auch die gesamten Messerteller können ausgewechselt werden, beispielsweise gegen Messerteller mit metallischen Klingen.

Abweiser 11 in Form von kreisbogenförmigen Drahtbügeln halten etwa die Fläche frei, die von den Kunststofffäden 10 des Schneidwerkzeugs 9 überstrichen wird, so dass beispielsweise bei der Annäherung an Hindernisse diese Hindernisse ebenso geschont werden wie die Kunststofffäden 10 selbst, da die Abweiser 11 eine zu starke Annäherung der Messerteller an derartige Hindernisse verhindern.

Von der 4-rilligen Keilriemenscheibe 6 verläuft innerhalb jedes Schwenkarmes 7 ein Keilriemen zu dem jeweiligen Schneidwerkzeug 9 des Schwenkarms 7. Durch die Drehrichtung der Keilriemenscheibe 6 und aufgrund der Lagerwiderstände ihrer Lagerung sowie aufgrund der Antriebswirkung des Keilriemens vom Hydraulikmotor 4 auf die Keilriemenscheibe 6 sind die drei Schwenkarme 7, die als 3-strahliger Stern angeordnet sind, stets bestrebt, sich um die Drehachse 8 zu drehen. Diese Drehrichtung ist konstruktiv so ausgelegt, dass der den Ausleger verlängernde, nach außen ragende Schenkarm 7 nach hinten zu schwenken bestrebt ist, also bei dem nach rechts ragenden Ausleger im Uhrzeigersinn um die Drehachse 8 zu drehen bestrebt ist.

Diese Drehbewegung wird durch einen Anschlag 12 behindert, der durch eine Rolle 14 gebildet ist. Die Rolle 14 ist zwischen zwei Haltelaschen 15 drehbeweglich gelagert, wobei die Haltelaschen 15 an eine Lagerhülse 16 geschweißt sind. Die Lagerhülse 16 ist um eine vertikale Achse schwenkbar gelagert und mit einem Ausleger 17 fest verbunden, wobei der Ausleger 17 mittels einer Zugfeder 18 zu einer Lasche 19 gespannt ist, die fest am Ausleger 2 vorgesehen ist.

Auf einer die Drehachse 8 bildenden zentralen Welle der Schwenkarme 7 ist eine Kulissenscheibe 20 mittels eines Splintes 21 drehfest befestigt, so dass sich die Kulissenscheibe 20 gemeinsam mit den Schwenkarmen 7 dreht. Die Kulissenscheibe 20 weist drei Vorsprünge 22 auf, von denen einer dem Anschlag 12 anliegt, wie aus der Zeichnung ersichtlich ist. Aufgrund der vorerwähnten Drehrichtung der 4-rilligen Keilriemenscheibe 6 und aufgrund der Lagerverluste an den Schneidwerkzeugen 9 und der Keilriemenscheibe 6 wird bei Betrieb der Mähvorrichtung 1, also bei laufendem Hydraulikmotor 4, die Anordnung der 3 Schwenkarme 7 in der aus der Zeichnung ersichtlichen Anordnung gehalten, bei welcher die Kulissenscheibe 20 mit einem gewissen Druck der Anschlag 12 anliegt. In dieser Anordnung verlängert einer der drei Schwenkarme 7 den Ausleger 2 nach außen, also in der vom Fahrzeug 3 weg weisenden Richtung.

Gerät dieser nach außen ragende Schwenkarm 7 mit dem Abweiser 11 nun gegen ein Hindernis, wie beispielsweise einen Pfosten, erhöht sich dadurch der Druck, mit dem der Vorsprung 22 der Kulissenscheibe 20 dem Anschlag 12 anliegt. Bei entsprechendem Druck gibt der Anschlag 12 nach. Gegen die Wirkung der Zugfeder 18 wird auf diese Weise der Anschlag 12 mitsamt der Lagerhülse 16 um deren Schwenkachse verschwenkt und außer Eingriff mit der Kulissenscheibe gebracht.

Der dem Pfosten anliegende Schwenkarm 7 kann also entgegen der Fahrtrichtung des Fahrzeugs 3 dem Hindernis nach hinten ausweichen, und wird dabei um die Drehachse 8 gemeinsam mit den beiden Schwenkarmen 7 verschwenkt. Sobald der Vorsprung 22 der Kulissenscheibe 20 an dem Anschlag 12 entlang gelaufen ist, wird der Anschlag 12 unter Wirkung der Zugfeder 18 wieder zurückbewegt, so dass er einen Anschlag für den nächsten Vorsprung 22 bildet. Dabei läuft die Kulissenscheibe 20 am Anschlag 12 entlang, bis der in Drehrichtung nächste Vorsprung 22 dem Anschlag 12 anliegt und auf diese Weise die Schwenkbewegung der 3-strahlig sternförmigen Anordnung der drei Schwenkarme 7 gebremst wird. Im diesem Zustand sieht die Anordnung genauso aus wie bei dem dargestellten Ausführungsbeispiel, nur dass lediglich der in Drehrichtung nächst Schwenkarm 7 nun den Ausleger 2 nach außen verlängert, so dass also die Schwenkarmanordnung um 120° verdreht worden ist. Abgesehen von dem Federgelenk, welches durch die Zugfeder 18 und die schenkbeweglich gelagerte Lagerhülse 16 gebildet wird, weist die Mähvorrichtung 1 ein weiteres Federgelenk auf: Bei einem Gelenk 23 ist die schwenkbewegliche Lagerung des Auslegers 2 an einer Tragvorrichtung 24 vorgesehen, welche ihrerseits am Fahrzeug 3 festgelegt ist. Gegen die Wirkung einer Feder 25 kann der Ausleger gegenüber dem Fahrzeug 3 nach hinten verschwenkt werden. Dies dient beispielsweise als Unfallschutz, wenn nicht der Schwenkarm 7, sondern versehentlich der Ausleger 2 gegen ein starres Hindernis geführt werden sollte.

Weiterhin ist durch eine Über-Totpunkt-Konstruktion vorgesehen, dass der Ausleger 2 ab einer bestimmten, nach hinten verschwenkten Stellung in dieser Stellung gehalten wird, in welcher er vollständig hinter dem Fahrzeug 3 angeordnet ist, ohne seitlich über das Fahrzeug 3 hinauszuragen. Zu diesem Zweck wird die Feder 25 ab einem bestimmten Schwenkpunkt des Auslegers 2 wieder entspannt, so dass der Ausleger 2 ab diesem vorgenannten Schwenk- oder Totpunkt selbständig weiter zu schwenken bestrebt ist. Die vollständig hinter dem Fahrzeug 3 befindliche Position des Auslegers 2 stellt eine Transportstellung der Mähvorrichtung 1 dar, in welcher die Mähvorrichtung 1 gar nicht oder möglichst wenig seitlich über das Fahrzeug 3 hinausragt.

## Patentansprüche

1. Mähvorrichtung, mit einem Ausleger, und einem vom Ausleger getragenen Schneidwerkzeug, wobei ein Schwenkarm (7), den Ausleger (2) verlängernd, über den Ausleger (2) hinausragt und um eine aufrechte Drehachse (8) drehbar am Ausleger (2) gelagert ist, wobei das Schneidwerkzeug (9) im Abstand von der Drehachse (8) an dem Schwenkarm (7) angeordnet ist, und wobei ein Anschlag (12) vorgesehen ist, welcher die Drehbewegung des Schwenkarms (7) begrenzt, und welcher außer Eingriff bringbar ist, derart, dass der Schwenkarm (7) um die Drehachse (8) beweglich ist, und wobei der Schwenkarm (7) bei außer Eingriff befindlichem Anschlag (12) drehangetrieben ist, derart, dass er automatisch um die Drehachse (8) schwenkt, wobei der Anschlag ein federbelasteter Anschlag (12) ist, welcher gegen die Federwirkung außer Eingriff bringbar ist, wobei dem Anschlag (12) ein am Schwenkarm (7) angeordnetes Druckstück zugeordnet ist, derart, dass der vom Druckstück auf den Anschlag (12) ausgeübte Druck ansteigt, wenn der an einem Hindernis anliegende Schwenkarm (7) in der bisherigen Mährichtung weiter bewegt wird, **dadurch gekennzeichnet, dass**
das Druckstück als Kulissenscheibe (20) ausgestaltet ist, die auf einer die Drehachse (8) bildenden Welle des Schwenkarms (7) drehfest befestigt ist.

2. Mähvorrichtung nach Anspruch 1, **dadurch gekennzeichnet, dass** am Ausleger (2) wenigstens zwei Schwenkarme (7) vorgesehen sind, die um denselben Drehpunkt (8) gemeinsam beweglich sind, wobei die einzelnen Vorsprünge (22) der Kulissenscheibe (20) jeweils ein Druckstück bilden, und wobei die Anzahl der Druckstücke der Anzahl der Schwenkarme (7) entspricht.

3. Mähvorrichtung nach Anspruch 2, **gekennzeichnet durch** drei sternförmig angeordnete Schwenkarme (7), die jeweils ein Schneidwerkzeug (9) tragen.

4. Mähvorrichtung nach einem der vorhergehenden Ansprüche, **dadurch gekennzeichnet, dass** der Anschlag (12) **dadurch** außer Eingriff gebracht wird, dass die Feder (18) nachgibt, wenn der durch das Druckstück auf den Anschlag (12) ausgeübte Druck zu groß wird.

5. Mähvorrichtung nach Anspruch 4, **dadurch gekennzeichnet, dass** der Anschlag (12) durch Schwenken um eine vertikale Achse außer Eingriff mit der Kulissenscheibe (20) gebracht wird.

6. Mähvorrichtung nach Anspruch 5, **dadurch gekennzeichnet, dass** der Anschlag (12) an dem Ausleger (2) angeordnet ist.

7. Mähvorrichtung nach Anspruch 1, **dadurch gekennzeichnet, dass** der Anschlag (12) als an dem Druckstück anliegende Rolle (14) ausgestaltet ist.

8. Mähvorrichtung nach einem der vorhergehenden Ansprüche, **gekennzeichnet durch** einen Hydraulik-Motor (4), sowie **durch** hydraulische Anschlussleitungen (5) mit Schnellkupplungen zum Anschluss an eine Fahrzeug-Hydraulik.

9. Mähvorrichtung nach einem der vorhergehenden Ansprüche, **gekennzeichnet durch** ein erstes flexibles Antriebselement - wie eine Kette oder ein Riemen - welches um einen Verteiler umläuft, wobei vom Verteiler zu jedem Schwenkarm (7) jeweils ein weiteres zweites flexibles Antriebselement verläuft.

10. Mähvorrichtung nach Anspruch 9, **dadurch gekennzeichnet, dass** die Antriebselemente in wenigstens zwei übereinander angeordneten Ebenen verlaufen.

11. Mähvorrichtung nach Anspruch 10. **dadurch gekennzeichnet, dass** der Verteiler als Riemenscheibe (6) mit einer Nut für einen Antriebsriemen und mit jeweils einer Nut für jeden zu einem Schwenkarm (7) verlaufenden Riemen ausgestattet ist..

12. Mähvorrichtung nach Anspruch 9, **dadurch gekennzeichnet, dass** die Drehachse, um welche das erste flexible Antriebselement am Verteiler umläuft, mit der Drehachse (8) des Schwenkarms (7) zusammenfällt.

13. Mähvorrichtung nach einem der vorhergehenden Ansprüche, **dadurch gekennzeichnet, dass** das Schneidwerkzeug (9) um eine aufrechte Drehachse rotierend gelagert ist.

14. Mähfahrzeug, **gekennzeichnet durch** eine Mähvorrichtung (1) nach einem der vorhergehenden Ansprüche.

15. Mähfahrzeug nach Anspruch 14, **dadurch gekennzeichnet, dass** der Ausleger (2) aus einer seitlich über das Fahrzeug (3) hinausragenden Mähstellung in eine demgegenüber weniger weit seitlich über das Fahrzeug (3) hinausragende Transportstellung beweglich gelagert ist.

16. Mähfahrzeug nach Anspruch 15, **dadurch gekennzeichnet, dass** der Ausleger (2) federbeweglich am Fahrzeug (3) festlegbar ist, derart, dass er gegen die Federwirkung entgegen der Fahrtrichtung nach hinten schwenkbar ist.

17. Mähfahrzeug nach Anspruch 16, **gekennzeichnet durch** eine Rastvorrichtung, welche den Ausleger in (2) einer nach hinten verschwenkten Transportstellung hält.

18. Mähfahrzeug nach Anspruch 17, **dadurch gekennzeichnet, dass** die Rastvorrichtung als Über-Totpunkt-Gelenk (23) ausgestaltet ist, derart, dass nach durchlaufen des Totpunktes der Ausleger (2) durch die Federwirkung unterstützt in seiner Transportstellung gehalten ist.

## Claims

1. Mowing device, with a boom, and a cutting tool carried by the boom, wherein a pivot arm (7), extending the boom (2), projects over the boom (2) and is mounted on the boom (2) so as to pivot about an upright axis of rotation (8), wherein the cutting tool (9) is arranged on the pivot arm (7) at a distance interval from the axis of rotation (8), and wherein a stop (12) is provided which delimits the rotational movement of the pivot arm (7) and which can be brought out of engagement in such a way that the pivot arm (7) can be moved about the axis of rotation (8), and wherein the pivot arm (7), with the stop (12) out of engagement, is rotationally driven in such a way it pivots automatically about the axis of rotation (8), wherein the stop is a spring-loaded stop (12), which can be brought out of engagement against the effect of the spring, wherein a pressure element arranged at the pivot arm (7) is allocated to the stop (12), in such a way that the pressure exercised by the pressure element onto the stop (12) rises when the pivot arm (7) encountering an obstacle is moved onwards in the previous direction of mowing, **characterised in that** the pressure element is designed as a link disk (20) which is secured in a torsionally resistant manner on a shaft of the pivot arm (7) forming an axis of rotation (8).

2. Mowing device according to Claim 1, **characterised in that** at least two pivot arms (7) are provided at the boom (2), which are movable in common about the same point of rotation (8), wherein the individual projections (22) of the link disk (20) in each case form a pressure element, and wherein the number of pressure elements corresponds to the number of pivot arms (7).

3. Mowing device according to Claim 2, **characterised by** three pivot arms (7) arranged in a star shape, which in each case carry a cutting tool (9).

4. Mowing device according to any one of the preceding claims, **characterised in that** the stop (12) is brought out of engagement, **in that** the spring (18) gives way when the pressure exerted on the stop (12) by the pressure element becomes too great.

5. Mowing device according to Claim 4, **characterised in that** the stop (12) is brought out of engagement with the link disk (20) by pivoting about a vertical axis.

6. Mowing device according to Claim 5, **characterised in that** the stop (12) is arranged at the boom (2).

7. Mowing device according to Claim 1, **characterised in that** the stop (12) is designed as a roller (14) in contact with the pressure element.

8. Mowing device according to any one of the preceding claims, **characterised by** a hydraulic motor (4) as well as by hydraulic connection lines (5) with quick-action couplings for connection to a vehicle's hydraulic system.

9. Mowing device according to any one of the preceding claims, **characterised by** a first flexible drive element, such as a chain or a belt, which runs about a distributor, wherein a further second flexible drive element runs in each case from the distributor to each pivot arm (7).

10. Mowing device according to Claim 9, **characterised in that** the drive elements run in at least two planes arranged above one another.

11. Mowing device according to Claim 10, **characterised in that** the distributor is designed as a pulley (6) with a slot for a drive belt and with in each case a slot for each belt running to a pivot arm (7).

12. Mowing device according to Claim 9, **characterised in that** the axis of rotation about which the first flexible drive element runs at the distributor coincides with the axis of rotation (8) of the pivot arm (7).

13. Mowing device according to any one of the preceding claims, **characterised in that** the cutting tool (9) is mounted so as to rotate about an upright axis of rotation.

14. Mowing vehicle **characterised by** a mowing device (1) according to any one of the preceding claims.

15. Mowing vehicle according to Claim 14, **characterised in that** the boom (2) is mounted on bearings so as to be movable out of a mowing position projecting laterally over the vehicle (3) into a travel position which in comparison projects less far laterally over the vehicle (3).

16. Mowing vehicle according to Claim 15, **characterised in that** the boom (2) can be secured in a spring movable manner to the vehicle (3) in such a way that it can be pivoted rearwards against the effect of the spring against the direction of travel.

17. Mowing vehicle according to Claim 16, **characterised by** an engagement device which holds the boom (2) in a travel position pivoted to the rear.

18. Mowing vehicle according to Claim 17, **characterised in that** the engagement device is designed as an upper dead centre joint (23) in such a way that, after running through the dead centre, the boom (2) supported by the effect of the spring is held in its travel position.

## Revendications

1. Dispositif de coupe avec un bras en porte-à-faux, et un outil de coupe porté par le bras en porte-à-faux, dans lequel un bras pivotant (7), prolongeant le bras en porte-à-faux (2) et dépassant du bras en porte-à-faux (2), est supporté sur le bras en porte-à-faux (2) de manière à pouvoir tourner autour d'un axe de rotation (8) vertical, dans lequel l'outil de coupe (9) est disposé sur le bras pivotant (7) à distance de l'axe de rotation (8), et dans lequel il est prévu une butée (12) qui limite le mouvement de rotation du bras pivotant (7) et qui peut être désengagée de manière que le bras pivotant (7) soit mobile autour de l'axe de rotation (8), et dans lequel le bras pivotant (7), lorsque la butée (12) est désengagée, est entraîné en rotation de manière à pivoter automatiquement autour de l'axe de rotation (8), dans lequel la butée est une butée (12) soumise à l'action d'un ressort qui peut être désengagée à l'encontre de l'action du ressort, dans lequel à la butée (12) est associée une pièce de pression disposée sur le bras pivotant (7), de manière que la pression exercée par la pièce de pression sur la butée (12) augmente lorsque le bras pivotant (7), s'appliquant contre un obstacle, continue d'être déplacé dans la direction de coupe actuelle, **caractérisé en ce que**
la pièce de pression est conçue sous la forme d'un disque à coulisse qui est fixé solidairement en rotation sur un arbre du bras pivotant (7), formant l'axe de rotation (8).

2. Dispositif de coupe selon la revendication 1, **caractérisé en ce que** sur le bras en porte-à-faux (2) sont prévus au moins deux bras pivotants (7) qui sont mobiles ensemble autour du même centre de rotation (8), les différentes saillies (22) du disque à coulisse (20) formant chacune une pièce de pression, et le nombre de pièces de pression correspondant au nombre de bras pivotants (7).

3. Dispositif de coupe selon la revendication 2, **caractérisé par** trois bras pivotants (7) disposés en étoile, qui portent chacun un outil de coupe (9).

4. Dispositif de coupe selon l'une quelconque des revendications précédentes, **caractérisé en ce que** la butée (12) est désengagée **en ce que** le ressort (18) cède lorsque la pression, exercée par la pièce de pression sur la butée (12), devient trop grande.

5. Dispositif de coupe selon la revendication 4, **caractérisé en ce que** la butée (12) est désengagée du disque à coulisse (20), par pivotement autour d'un axe vertical.

6. Dispositif de coupe selon la revendication 5, **caractérisé en ce que** la butée (12) est disposée sur le bras en porte-à-faux (2).

7. Dispositif de coupe selon la revendication 1, **caractérisé en ce que** la butée (12) est conçue sous la forme d'un rouleau (14) s'appliquant contre la pièce de pression.

8. Dispositif de coupe selon l'une quelconque des revendications précédentes, **caractérisé par** un moteur hydraulique (4), ainsi que par des conduites de raccordement hydrauliques (5) avec raccords rapides pour le raccordement à un système hydraulique de véhicule.

9. Dispositif de coupe selon l'une quelconque des revendications précédentes, **caractérisé par** un premier élément d'entraînement flexible - tel qu'une chaîne ou une courroie - qui tourne autour d'un répartiteur, un autre second élément d'entraînement flexible s'étendant chaque fois depuis le répartiteur vers chaque bras pivotant (7).

10. Dispositif de coupe selon la revendication 9, **caractérisé en ce que** les éléments d'entraînement s'étendent dans au moins deux plans superposés.

11. Dispositif de coupe selon la revendication 10, **caractérisé en ce que** le répartiteur est conçu sous la forme d'un disque pour courroie (6) avec une rainure pour une courroie d'entraînement et avec chaque fois une rainure pour chaque courroie s'étendant vers un bras pivotant (7).

12. Dispositif de coupe selon la revendication 9, **caractérisé en ce que** l'axe de rotation, autour duquel tourne le premier élément d'entraînement flexible sur le répartiteur, coïncide avec l'axe de rotation (8) du bras pivotant (7).

13. Dispositif de coupe selon l'une quelconque des revendications précédentes, **caractérisé en ce que** l'outil de coupe (9) est supporté en rotation autour d'un axe de rotation vertical.

14. Véhicule faucheur, **caractérisé par** un dispositif de coupe (1) selon l'une quelconque des revendications précédentes.

15. Véhicule faucheur selon la revendication 14, **caractérisé en ce que** le bras en porte-à-faux (2) est supporté de manière à se déplacer depuis une position de coupe, dépassant latéralement du véhicule (3), dans une position de transport dépassant du véhicule (3) moins loin latéralement que la première position de coupe.

16. Véhicule faucheur selon la revendication 15, **caractérisé en ce que** le bras en porte-à-faux (2) peut être fixé sur le véhicule (3), mobile sous l'effet d'un ressort, de façon qu'il puisse pivoter vers l'arrière à l'encontre de l'effet du ressort et dans le sens contraire au sens de marche.

17. Véhicule faucheur selon la revendication 16, **caractérisé par** un dispositif d'encliquetage qui maintient le bras en porte-à-faux (2) dans une position de transport pivotée vers l'arrière.

18. Véhicule faucheur selon la revendication 17, **caractérisé en ce que** le dispositif d'encliquetage est conçu sous la forme d'une articulation à dépassement de point mort (23), de manière qu'après dépassement du point mort le bras en porte-à-faux (2) soit maintenu dans sa position de transport, soutenu par l'action du ressort.
